# EUROPEAN PATENT APPLICATION

(11) **EP 4 822 314 A1**
(43) Date of publication of application: **14.10.2026**
(21) Application number: 25169486.5
(22) Date of filing: 09.04.2025
(51) Int. Cl.: G01K 3/00, G01K 7/24, B60L 3/00, B60L 53/16, B60L 53/22, B60L 53/62, H01R 13/66

(54) **OVER-TEMPERATURE CONDITION SENSING**

(71) Applicant: Volvo Penta Corporation, 405 08 Göteborg (SE)
(72) Inventor: BHUMIREDDY, Amaranath Reddy, 426 50 Göteborg (SE); Lokanandi, Manjitha, 417 22 Göteborg (SE)
(74) Representative: Valea AB

(57) **Abstract**

A device, circuit, and method for sensing an over-temperature condition. The device may include a plurality of thermistors connected in series with one another. The plurality of thermistors may include a first thermistor configured with a first variable resistance inversely proportional to a first temperature and a second thermistor configured with a second variable resistance inversely proportional to a second temperature. The device may include a plurality of Zener diodes, including a first Zener diode connected in parallel with the first thermistor and a second Zener diode connected in parallel with the second thermistor. The device may include one or more terminals configured to connect a control unit, which may be configured to monitor a voltage across the plurality of thermistors and the plurality of Zener diodes, in parallel with the plurality of thermistors and the plurality of Zener diodes.

## Description

### TECHNICAL FIELD

The disclosure relates generally to electronics, such as power electronics. In particular aspects, the disclosure relates to over-temperature condition sensing. The disclosure can be applied to vehicles, such as electric vehicles, such as electric vehicle charging. Although the disclosure may be described with respect to vehicles, the disclosure is not restricted to use with vehicles or vehicle charging.

### BACKGROUND

Electric power applications and circuits supporting such applications may be sensitive to temperature conditions, which may change during operation or use. Monitoring such temperature conditions may involve complex circuits, which may be challenging to employ in packaging or applications with physical space constraints. Temperature monitoring for electric power applications may also depend on power system type, such as energy needs, voltage levels, whether the system operates with direct current (DC) or alternating current (AC), a number of phases in AC systems, and the like.

### SUMMARY

According to a first aspect of the disclosure, a device for sensing an over-temperature condition is provided. The device may comprise a plurality of thermistors connected in series with one another. The plurality of thermistors may comprise a first thermistor configured with a first variable resistance inversely proportional to a first temperature and a second thermistor configured with a second variable resistance inversely proportional to a second temperature. The device may comprise a plurality of Zener diodes, which may comprise a first Zener diode connected in parallel with the first thermistor and a second Zener diode connected in parallel with the second thermistor. The device may comprise one or more terminals configured to connect a control unit in parallel with the plurality of thermistors and the plurality of Zener diodes. The control unit may be configured to monitor a voltage across the plurality of thermistors and the plurality of Zener diodes. The first aspect of the disclosure may seek to identify an over-temperature condition when a temperature of any conductor of a multi-conductor system exceeds a temperature threshold. A technical benefit may include reducing, relative to other temperature sensing solutions, a quantity of wires and/or terminals in an over-temperature sensing device, thus reducing a relative size of a wiring harness and/or envelope for such a device.

Optionally in some examples, including in at least one preferred example, the control unit comprises a constant current source. A technical benefit may include allowing for over-temperature sensing using a circuit topology comprising thermistors and Zener diodes.

Optionally in some examples, including in at least one preferred example, the first Zener diode may be configured with a first nominal breakdown voltage that is, for example, based at least in part on the first variable resistance, and the second Zener diode may be configured with a second nominal breakdown voltage that is, for example, based at least in part on the second variable resistance. A technical benefit may include identifying an over-temperature condition when a voltage across either the first Zener diode or the second Zener diode is less than the respective nominal breakdown voltage.

Optionally in some examples, including in at least one preferred example, the first nominal breakdown voltage is, for example, based at least in part on a resistance of the first thermistor at a first temperature equal to or greater than a threshold temperature value, and the second nominal breakdown voltage is, for example, based at least in part on a resistance of the second thermistor at a second temperature equal to or greater than the threshold temperature value. A technical benefit may be a resulting circuit that provides an indication of an over-temperature condition with passive devices and/or by relying on a constant current source.

Optionally in some examples, including in at least one preferred example, the control unit comprises logic that may be configured to identify an over-temperature condition, for example, based on the voltage across the plurality of Zener diodes less than a threshold voltage value. A technical benefit may include recognition of an over-temperature condition using readily measurable circuit characteristics without a need for additional electronics to directly measure temperature.

Optionally in some examples, including in at least one preferred example, the threshold voltage value comprises a sum of respective nominal breakdown voltages for each Zener diode of the plurality of Zener diodes. A technical benefit may include recognition of an over-temperature condition, such as by measuring voltage at terminals of device, without a need for monitoring voltage across individual components.

Optionally in some examples, including in at least one preferred example, the plurality of thermistors connected in series with one another comprises a third thermistor and a fourth thermistor, and the plurality of Zener diodes comprises a third Zener diode connected in parallel with the third thermistor and a fourth Zener diode connected in parallel with the fourth thermistor. A technical benefit may include monitoring for an over-temperature condition for each phase and/or neutral of a multiphase system.

Optionally in some examples, including in at least one preferred example, the threshold voltage value comprises a sum of the first nominal breakdown voltage, the second nominal breakdown voltage, a third nominal breakdown voltage, and a fourth nominal breakdown voltage. A technical benefit may include recognition of an over-temperature condition by comparison to a readily observable or determinable benchmark.

Optionally in some examples, including in at least one preferred example, the device may comprise a receptacle configured to receive a two-pin connector of an electric vehicle charging controller (EVCC); the receptacle may comprise the terminals and the EVCC may comprise the control unit. A technical benefit may include an ability to employ the disclosed over-temperature condition sensing in an electric vehicle charging system in a complementary manner with other requirements of the system.

Optionally in some examples, including in at least one preferred example, the device may comprise a wiring harness, which may comprise a pair of wires that couple the one or more terminals to the plurality of thermistors and the plurality of Zener diodes. A technical benefit may include a tidy, and thus potentially safer and more efficient, routing of wires in a smaller envelope, which may not be achievable with a circuit that employs more wires to perform similar temperature sensing.

Optionally in some examples, including in at least one preferred example, the thermistors of the plurality of thermistors each comprise a negative temperature coefficient (NTC) sensor. A technical benefit may include leveraging the NTC properties of resistance inversely proportional to temperature.

Optionally in some examples, including in at least one preferred example, each thermistor of the plurality is associated with one phase conductor or one neutral conductor of an electric vehicle inlet (EVI). A technical benefit may include an ability to employ the disclosed over-temperature condition sensing in an electric vehicle charging system integrated into a vehicle.

According to a second aspect of the disclosure, a circuit for sensing an over-temperature condition is provided. The circuit may comprise a first thermistor configured with a first variable resistance inversely proportional to a first temperature of the first thermistor. The circuit may comprise a second thermistor configured with a second variable resistance inversely proportional to a second temperature of the second thermistor. The second thermistor may be connected in series with at least the first thermistor. The circuit may comprise a first Zener diode connected in parallel with the first thermistor. The circuit may comprise a second Zener diode connected in parallel with the second thermistor. The circuit may comprise one or more terminals, which may be configured to connect a control unit, such as connect in parallel with at least the series-connected first thermistor and second thermistor. The control unit may be configured to monitor a voltage across a plurality of Zener diodes comprising the first Zener diode and the second Zener diode. The second aspect of the disclosure may seek to identify an over-temperature condition when a temperature of any conductor of a multi-conductor system exceeds a temperature threshold. A technical benefit may include a circuit usable in various applications, which circuit may have a reduced, relative to other temperature sensing solutions, quantity of wires and/or terminals in an over-temperature sensing device, thus reducing a relative size of a wiring harness and/or envelope for such a device employing the circuit.

Optionally in some examples, including in at least one preferred example, the circuit may comprise a third thermistor and a fourth thermistor connected in series with one another and the series-connected first thermistor and second thermistor. The circuit may comprise a third Zener diode connected in parallel with the third thermistor. The circuit may comprise a fourth Zener diode connected in parallel with the fourth thermistor. The control unit may be configured to monitor the voltage across the plurality of Zener diodes, and the plurality of Zener diodes comprises the third Zener diode and the fourth Zener diode. A technical benefit may include allowing for monitoring for an over-temperature condition for each phase and/or neutral of a multiphase system.

Optionally in some examples, including in at least one preferred example, the threshold voltage value may comprise a sum of respective nominal breakdown voltages for each Zener diode of the plurality of Zener diodes. A technical benefit may include recognition of an over-temperature condition, such as by measuring voltage at terminals of device without a need for monitoring voltage across individual components.

Optionally in some examples, including in at least one preferred example, the circuit may comprise a pair of conductors, such as coupling the one or more terminals to the series-connected first thermistor, second thermistor, third thermistor, and/or fourth thermistor. A technical benefit may include allowing for packaging the circuit with a tidy, and thus potentially safer and more efficient, routing of wires in a smaller envelope, which may not be achievable with a circuit that employs more wires to perform similar temperature sensing.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary device, including a circuit, for sensing an over-temperature condition according to one or more examples.
**FIG. 2** is an exemplary method for sensing an over-temperature condition according to one or more examples.
**FIG. 3** is another view of **FIG. 1****,** according to one or more examples.

### DETAILED DESCRIPTION

The detailed description set forth below provides information and examples of the disclosed technology with sufficient detail to enable those skilled in the art to practice the disclosure.

Electric power circuits and applications, such as electrical vehicle chargers, may benefit from integrated temperature sensing. The present disclosure may allow for effective determination of a temperature condition, such as an over-temperature condition, using a circuit that can fit in a smaller envelope and with fewer conductors, such as wires, relative to other temperature-sensing solutions.

By way of example, electric vehicles with energy needs that are relatively higher than other use cases may use multiphase AC systems (either alone or in addition to DC systems) to accommodate charging or other power demands. Examples of such vehicles with higher energy needs include trucks, boats, and other equipment. Such multiphase and dual current (e.g., AC and DC) systems may benefit from temperature sensing on each conductor (or each terminal) of a charger. DC charging may employ a temperature-sensing solution that leverages one temperature sensor per terminal of a charger (e.g., on each of the positive and negative terminals). AC charging, such as high-power AC charging, may employ a temperature-sensing solution that leverages one temperature sensor per phase and one on a neutral conductor or terminal. In the case of a three-phase, four-wire system, for example, such an AC temperature-sensing solution would employ four temperature sensors.

Some power electronics applications, such as certain DC systems, may incorporate or rely on temperature (e.g., degree measurement) to make decisions or trigger actions. In such cases, an actual temperature, rather than a triggering condition or threshold, may be a basis for action.

By contrast, some systems, such as in certain AC charging systems, temperature sensing may include determining whether a threshold temperature is exceeded (or, in some cases, if a temperature drops below a threshold). In such systems, monitoring for a temperature condition may not involve measuring or determining an actual temperature or using the actual temperature for control; rather, actions may be taken depending on whether temperature thresholds are exceeded (or undershot). For example, in some AC vehicle charging systems, a thermal incident, such as an over-temperature condition, may be identified or determined when the temperature of a conductor (e.g., a phase or neutral) of the system exceeds a threshold, which may trigger a shutdown or disconnect of the charging system.

**In** some three-phase, four-wire AC systems, for example, four temperature sensors may be employed, and five control wires (e.g., one for each sensor and one common) may be used to monitor temperature conditions. Certain electric vehicle charging controllers (EVCC) use such a configuration to monitor temperature of electric vehicle inlets (EVI). But as disclosed herein, a temperature monitoring circuit may be employed that allows for monitoring each phase and neutral of an AC system with fewer wires; e.g., according to the present disclosure, temperature sensing may be performed with one sensor per conductor or terminal and with two control wires. This two-wire (e.g., two control wire) solution may be employed regardless of whether two, three, four or more temperature sensors are employed.

This may advantageously reduce the quantity of wires to manage or route in a wiring harness and/or within the envelope of, for example, an EVI. Likewise, a quantity of terminals or pins for such an EVI may be reduced, for example, reduced from five to two. Similar benefits may be realized in other examples; these advantages are not limited to electric vehicle charging applications. Further, as disclosed herein, temperature monitoring may be accomplished with a combination of discrete electronic devices (e.g., negative temperature coefficient (NTC) temperature sensors and Zener diodes) sized to leverage certain characteristics under certain temperature conditions, thus allowing for temperature-based actions without necessarily monitoring an actual temperature (e.g., as expressed in degrees C or F) of a circuit. This may present an advantage over other, potentially more complex, semiconductor or processor-based solutions.

As disclosed herein, in one or more examples, a circuit for determining an over-temperature condition may include one or several temperature sensors, such as thermistors, such as NTC temperature sensors, which may be selected, such as sized, based on their temperature rating (e.g., their performance characteristics, such as resistance, at a particular temperature or temperature range). NTC temperature sensors may be seen as having a relatively higher resistance at lower temperature and a relatively lower resistance at higher temperature. In other words, the electrical resistance of an NTC may be inversely proportional to a temperature, such as the temperature experienced at (sometimes referred to as "seen by") the exterior of the body of the device. An NTC temperature sensor may be understood as an example or type of thermistor. A thermistor may be understood as a circuit component having a variable resistance that changes as a function of temperature. In one or more examples positive temperature coefficient (PTC) temperature sensors may be employed with appropriate changes to other circuit components.

A circuit for determining an over-temperature condition may also include Zener diodes, which may each be configured in the circuit in a complementary fashion with an NTC temperature sensor, such as in parallel, to provide for a certain response when an over-temperature condition exits. Zener diodes may be selected, such as sized, based on their breakdown voltage. For example, a Zener may be selected because it has a breakdown voltage equal to a constant current value times the resistance at a given temperate of a selected NTC temperature sensor. For example, the Zener breakdown voltage may be equal to the product of the constant current value and the NTC temperature sensor's resistance at the temperature corresponding to an over-temperature condition. A Zener diode's breakdown voltage may be seen as the voltage across the diode at which the diode begins to conduct current.

Accordingly, for an NTC temperature sensor and a Zener diode connected in parallel, when a temperature of the sensor is below the temperature of an over-temperature condition, the voltage across the Zener diode will be at breakdown voltage. If the temperature experienced by the NTC temperature sensor exceeds the temperature of the over-temperature condition, the voltage across the Zener diode will be less than the breakdown voltage. A voltage measurement across the Zener diode with a value less than the breakdown voltage thus indicates an over-temperature condition.

This same principle can be applied for several conductors, such as several conductors or terminals of a multiphase system. In the case of a three-phase, four-wire system, which may include an NTC temperature sensor and Zener diode connected in parallel to respectively monitor each conductor (e.g., each phase and the neutral), a measured voltage across all four Zener diodes equal to four times the breakdown voltage may indicate a normal condition. But if a temperature of any conductor associated with a sensor (e.g., the temperature seen by and NTC temperature sensor) crosses the temperature of an over-temperature condition, then voltage across the corresponding Zener diode will be less than its breakdown voltage. So the measured voltage across all four Zener diodes would be less than four times the breakdown voltage. This is the indication of over temperature in such an example.

Further details and examples are described with reference to the Figures.

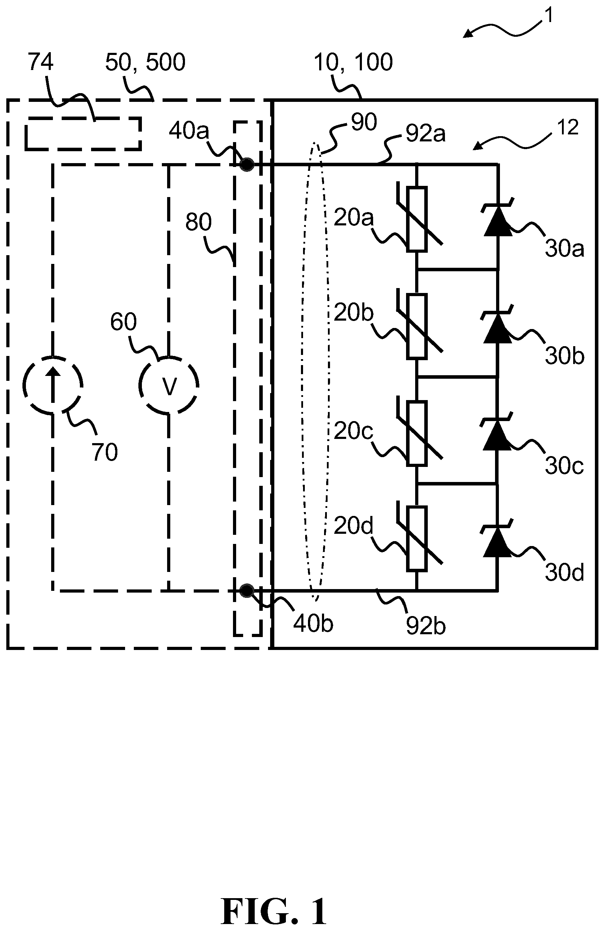

**FIG. 1** is an exemplary system 1, including a device 10 and circuit 12, for sensing an over-temperature condition according to one or more examples. The device 10 may include one or several, such as a plurality of, thermistors 20a, 20b, 20c, and 20d, which may be connected in series with one another. The thermistors 20a, 20b, 20c, 20d, may include a first thermistor 20a, which may be configured with a first variable resistance inversely proportional to a first temperature and a second thermistor 20b configured with a second variable resistance inversely proportional to a second temperature. The thermistors 20a, 20b, 20c, and 20d may be NTC temperature sensors.

In one or more examples, the first temperature and the second temperature may be the same or different temperatures. The first temperature and the second temperature may be the temperature experienced at, such as seen by, the exterior of the body of the first thermistor and the second thermistor, respectively.

The device 10 may include one or several, such as a plurality of, Zener diodes 30a, 30b, 30c, and 30d, which may include a first Zener diode 30a connected in parallel with the first thermistor 20a and a second Zener diode 30b connected in parallel with the second thermistor 20b. In one or more examples, the plurality of Zener diodes 30a, 30b, 30c, 30d, includes a third Zener diode 30c connected in parallel with the third thermistor 20c and a fourth Zener diode 30d connected in parallel with the fourth thermistor 20d.

In one or more examples, the first Zener diode 30a is configured with a first nominal breakdown voltage that is based on, such as based at least in part on, the first variable resistance of the first thermistor 20a. In one or more examples, the second Zener diode 30b is configured with a second nominal breakdown voltage that is based on, such as based at least in part on, the second variable resistance of the second thermistor 20b.

In one or more examples, the first nominal breakdown voltage of the first Zener diode 30a is based on, such as based at least in part on, a resistance of the first thermistor 20a at a first temperature equal to or greater than a threshold temperature value. In one or more examples, the second nominal breakdown voltage is based on, such as based at least in part on, a resistance of the second thermistor 20b at a second temperature equal to or greater than the threshold temperature value.

A nominal breakdown voltage may be seen as a breakdown voltage rating of a Zener diode 30a-30d. Nominal as used herein may be understood as a published rating of a circuit component, such as a rating from a datasheet. A constant current, such as the current from constant current source 70, times the resistance of the first thermistor 20a at a temperature equal to (or about equal to) a temperature that represents an over-temperature condition of device 10 may equal a voltage used to define a breakdown voltage value for a Zener diode 30a. The threshold temperature value discussed herein may be seen as the temperature that represents the over-temperature condition of device 10. The over-temperature condition may be a temperature at which the device 10 or an element of device 10 exceeds an operating ability or rating. Accordingly, a nominal breakdown voltage of Zener diode 30a may be based on, such as based at least in part on, a resistance of thermistor 20a. Nominal breakdown voltages of Zener diodes 30b-30d may be similarly based on respective resistances of thermistors 20b-20d. Whether a nominal breakdown voltage of a Zener diode is based on a resistance of thermistor may be apparent from context and circuit topology.

The device 10 may include one or more terminals 40a, 40b, which may be configured to connect a control unit 50, such as to connect in parallel with the plurality of thermistors 20a-20d and the plurality of Zener diodes 30a-30d. The control unit 50 may be configured to monitor a voltage, such as with a voltmeter 60, across the plurality of thermistors 20a-20d and/or the plurality of Zener diodes 30a-30d.

In one or more examples, the control unit 50 comprises the constant current source 70. The constant current source 70 may include a circuit or device that maintains a fixed, steady output current regardless of changes in load resistance or supply voltage within its operating range. The constant current source 70 may include, for example: a linear regulator; one or more of a buck converter, a boost converter, or a buck-boost converter operating in current-mode control; and/or flyback or forward converters with current sensing and regulation.

In one or more examples, control unit 50 comprises logic 74 configured to identify an over-temperature condition based on the voltage across the plurality of Zener diodes 30a-30d less than a threshold voltage value. In one or more examples, the threshold voltage value may be a sum of respective nominal breakdown voltages for each Zener diode of the plurality of Zener diodes 30a-30d (or a subset of such diodes in an example with fewer combinations of thermistors and Zener diodes). In one or more examples, the threshold voltage value comprises a sum of the first nominal breakdown voltage, the second nominal breakdown voltage, a third nominal breakdown voltage, and a fourth nominal breakdown voltage.

Logic 74 may include a semiconductor device, such as a processor, microcontroller, digital signal processor, integrated circuit (e.g., ASIC), array (e.g., FPGA), or the like configured to receive an input from voltmeter 60 and to determine a voltage across the Zener diodes 30a-30d. Logic 74 may be configured to determine a voltage across thermistors 20a-20d (or a subset of such thermistors in an example with fewer combinations of thermistors and Zener diodes). In one or more examples, the voltage across the thermistors 20a-20d is the same as the voltage across the Zener diodes 30a-30d because of the topology of circuit 12.

In one or more examples, device 10 includes receptacle 80, which may be configured to receive a connector, such as a two-pin connector of an EVCC 500. In one or more examples, the receptacle 80 comprises terminals 40a, 40b and the EVCC 500 comprises the control unit 50. An EVCC 500 may be seen as a charging source, such as a portion of an electrical vehicle charging system coupled with, such as connected to, a utility or line-voltage power source.

The control unit 50 may be an EVCC 500. In one or more examples, the device 10, such as EVI 100, includes a wiring harness 90, which comprises, such as houses, a pair of wires 92a, 92b (also sometimes referred to as a pair of conductors) that couple the one or more terminals 40a, 40b to plurality of thermistors 20a-20d and the plurality of Zener diodes 30a-30d. For example, each thermistor 20a-20d may be connected in parallel with a Zener diode 30a-30d and configured to monitor a conductor of an AC system providing power via EVCC 500 in order to sense or detect an over-temperature condition for EVI 100. For example, each thermistor 20a-20d may be associated with one phase conductor or one neutral conductor of the EVI 100. The over-temperature sensing may be accomplished with the two wires 92a and 92b via terminals 40a and 40b, which may simplify the design or reduce, relatively, the size of wiring harness 90 compared to another temperature sensing solutions that may include four or five wires and four or five terminals to convey similar signalling. In one or more examples, an EVI 100 comprises the device 10. An EVI 100 may be seen as a receiver for a charging source, such as a portion of an electric vehicle charging system coupled with, such as connected to or residing on, an electric vehicle. In some examples, an EVCC 500 may be referred to as a plug and an EVI 100 may be referred to as a receptacle.

As one illustrative example, current source 70 may have a constant current value of 10mA. Thermistors 20a-20d may each have a resistance of 5kΩ at a temperature of 25°C and 0.394kΩ at a temperature of 95°C, which may be considered an over-temperature condition or threshold temperature, which may be a point at which charging for an electric vehicle is stopped, such as interrupted. In such an example, a Zener diode breakdown voltage is 3.94V, which is the product of 10mA times 0.394kΩ. Accordingly, Zener diodes 30a-30d with around 3.94V breakdown voltage are selected. For instance, some commercially available Zener diodes may have a nominal breakdown voltage of 3.9V.

According to the illustrative example, so long as a temperature for each conductor of an EVI 100 is less than 95°C (or as long as each thermistor 20a-20d sees such a temperature), the resistance of each thermistor is greater than 0.394kΩ. So the voltage across each thermistor will be greater than 3.94V, which is higher than a nominal breakdown voltage of 3.9V; thus the voltage across the Zener diode is limited to 3.9V because of the operating principles of Zener diodes.

According to the illustrative example, while the temperature of each conductor of the EVI 100 is less than 95°C, a voltage measured across the Zener diodes 30a-30d is equal to four times 3.9V or 15.6V. If the temperature of any conductor reaches 95°C the resistance of the corresponding thermistor would reduce; for example, at a temperature of 97°C, thermistor resistance may be 0.36kΩ. In such an example, assuming the temperature is 97°C for one conductor (e.g., seen by thermistor 20a) and less than 95°C for all other conductors (e.g., seen by thermistors 20b-20d), then a measured voltage across the Zener diodes 30a-30d may be equal to 10mA times 0.36kΩ, plus three times 3.9V, which is equal to 15.3V. In other words, in the illustrative example, a total voltage across the Zener diodes 30a-30d when one conductor experiences an over-temperature condition of 97°C, is less than a sum of the breakdown voltages across the Zener diodes 30a-30d when no conductor experiences an over-temperature condition. Accordingly, when the lower voltage value of the illustrative example is sensed, charging via the EVI 100 may be stopped.

The foregoing illustrative example has been described with reference to features of system 1, but the skilled person will recognize that other ratings and values for components of system 1 are possible and supported by the present disclosure.

In one or more examples, the circuit 12 comprises a first thermistor 20a configured with a first variable resistance inversely proportional to a first temperature of the first thermistor 20a.

In one or more examples, the circuit 12 comprises a second thermistor 20b configured with a second variable resistance inversely proportional to a second temperature of the second thermistor 20b. The second thermistor 20b may be connected in series with at least the first thermistor 20a.

In one or more examples, the circuit 12 comprises a first Zener diode 30a connected in parallel with the first thermistor 20a.

In one or more examples, the circuit 12 comprises a second Zener diode 30b connected in parallel with the second thermistor 20b.

In one or more examples, the circuit 12 comprises one or more terminals 40a, 40b configured to connect a control unit 50 in parallel with at least the series-connected first thermistor 20a and second thermistor 20b. The control unit may be configured to monitor a voltage, such as a voltage seen by voltmeter 60, across a plurality of Zener diodes comprising the first Zener diode 30a and the second Zener diode 30b.

In one or more examples, the circuit 12 comprises a third thermistor 20c and a fourth thermistor 20d connected in series with one another and the series-connected first thermistor 20a and second thermistor 20b.

In one or more examples, the circuit 12 comprises a third Zener diode 30c connected in parallel with the third thermistor 20c.

In one or more examples, the circuit 12 comprises a fourth Zener diode 30d connected in parallel with the fourth thermistor 20d.

In one or more examples, the control unit 50 is configured to monitor the voltage across the plurality of Zener diodes, and the plurality of Zener diodes comprises the third Zener diode 30c and the fourth Zener diode 30d.

In one or more examples of the circuit 12, the control unit 50 comprises a constant current source 70.

In one or more examples of the circuit 12, the control unit 50 is configured to identify an over-temperature condition based on the voltage across the plurality of Zener diodes 30a, 30b, 30c and/or 30d less than a threshold voltage value.

In one or more examples of the circuit 12, the threshold voltage value comprises a sum of respective nominal breakdown voltages for each Zener diode of the plurality of Zener diodes 30a, 30b, 30c and/or 30d.

In one or more examples of the circuit 12, the one or more terminals may be configured to receive a connector, such as a two-pin connector of an EVCC 500.

In one or more examples, the circuit 12 comprises a pair of conductors 92a, 92b coupling the one or more terminals 40a, 40b to the series-connected first thermistor 20a, second thermistor 20b, third thermistor 20c, and/or fourth thermistor 20d.

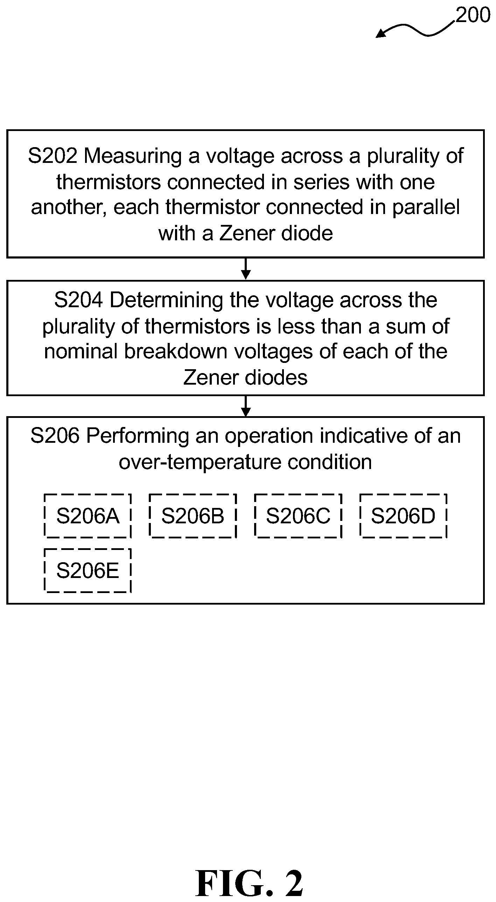

**FIG. 2** is an exemplary method 200 for sensing an over-temperature condition according to one or more examples. The method 200 may be performed by a control unit, such as control unit 50, which may be connected to or coupled with a device, such as device 1, which may include circuit, such as circuit 2 described with reference to FIG. 1.

The method 200 comprises measuring S202 a voltage across a plurality of thermistors connected in series with one another. In one or more examples, each thermistor is configured with a variable resistance, which may be inversely proportional to a temperature of the thermistor, such as a temperature of a body of such thermistor, which may be or may be related to a temperature of another device or conductor near such thermistor. In one or more examples, each thermistor is connected in parallel with a Zener diode.

The method 200 comprises determining S204 that the voltage across the plurality of thermistors is less than a threshold voltage value, such as sum of breakdown voltages of each of the Zener diodes, such as a sum of nominal breakdown voltages of each of the Zener diodes.

The method 200 comprises performing S206 an operation indicative of the over-temperature condition, such as performing the operation based on the determination that the voltage across the plurality of thermistors is less than the sum.

In one or more examples of the method 200, performing the operation indicative of the over-temperature condition comprises transmitting S206A indication signaling associated with the over-temperature condition. Such transmitting, which may be a wired or wireless transmission, and may include transmitting signaling from the control unit to another device or component of the control unit or external to the control unit.

In one or more examples of the method 200, performing the operation indicative of the over-temperature condition comprises changing S206B a current or voltage associated with an EVI.

In one or more examples of the method 200, performing the operation indicative of the over-temperature condition comprises disconnecting S206C the EVI from a power source. Such disconnecting may include operating one or more switches, opening a fuse or circuit breaker, or activating another disconnecting means.

In one or more examples of the method 200, performing the operation indicative of the over-temperature condition comprises activating S206D a cooling source for the EVI. Activating a cooling source may include operating a valve or other transducer to allow coolant, such as fluid and/or air, to enter a portion of, for example, a circuit or device monitored for the over-temperature condition.

In one or more examples of the method 200, performing the operation indicative of the over-temperature condition comprises logging S206E data indicative of the over-temperature condition. Such logging may include transmitting a signal to another device, writing data to a memory or register, and/or opening, such as burning, one or more fuses.

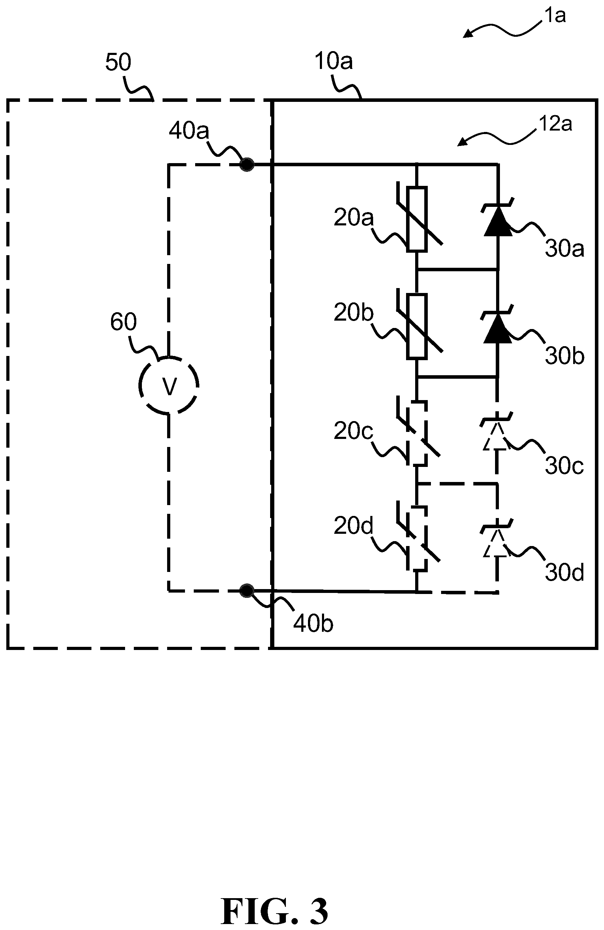

**FIG. 3** is another view of **FIG. 1****,** according to one or more examples. A system 1a may be configured for sensing an over-temperature condition. The device 10a comprises a plurality of thermistors 20a, 20b connected in series with one another. The plurality of thermistors comprises a first thermistor 20a configured with a first variable resistance inversely proportional to a first temperature and a second thermistor 20b configured with a second variable resistance inversely proportional to a second temperature.

The device 10a comprises a plurality of Zener diodes 30a, 30b comprising a first Zener diode 30a connected in parallel with the first thermistor 20a and a second Zener diode 30b connected in parallel with the second thermistor 20b.

The device 10a comprises one or more terminals 40a, 40b configured to connect a control unit 50 in parallel with the plurality of thermistors 20a, 20b and the plurality of Zener diodes 30a, 30b. The control unit 50 may be configured to monitor a voltage, such as with voltmeter 60, across the plurality of thermistors 20a, 20b and the plurality of Zener diodes 30a, 30b.

In one or more examples, the plurality of thermistors includes a third thermistor 20c connected in parallel with a third Zener diode 30c. The plurality of thermistors may also include a fourth thermistor 20d connected in parallel with a fourth Zener diode 30d.

A circuit 12a may be configured for sensing an over-temperature condition. The circuit 2a comprises a first thermistor 20a configured with a first variable resistance inversely proportional to a first temperature of the first thermistor 20a.

The circuit 12a comprises a second thermistor 20b configured with a second variable resistance inversely proportional to a second temperature of the second thermistor 20b. The second thermistor 20b is connected in series with at least the first thermistor 20a.

The circuit 12a comprises a first Zener diode 30a connected in parallel with the first thermistor 20a and a second Zener diode 30b connected in parallel with the second thermistor 20b.

The circuit 12a comprises one or more terminals 40a, 40b configured to connect a control unit 50 in parallel with at least the series-connected first thermistor 20a and second thermistor 20b. The control unit 50 is configured to monitor a voltage, such as with voltmeter 60, across a plurality of Zener diodes comprising the first Zener diode 30a and the second Zener diode 30.

In one or more examples, the circuit 12a comprises a third thermistor 20c and/or a fourth thermistor 20d connected in series with the first thermistor 20a and the second thermistor 20b.

In one or more examples, the plurality of Zener diodes of circuit 12a comprises a third Zener diode 30c connected in parallel with the third thermistor 20c and/or a fourth Zener diode 30d connected in parallel with the fourth thermistor 20d.

Various example methods, devices, apparatuses, circuits, and systems are set forth in the following.

Example 1: A device for sensing an over-temperature condition, the device comprising:
- a plurality of thermistors connected in series with one another, the plurality comprising a first thermistor configured with a first variable resistance inversely proportional to a first temperature and a second thermistor configured with a second variable resistance inversely proportional to a second temperature;
- a plurality of Zener diodes comprising a first Zener diode connected in parallel with the first thermistor and a second Zener diode connected in parallel with the second thermistor; and
- one or more terminals configured to connect a control unit in parallel with the plurality of thermistors and the plurality of Zener diodes, the control unit configured to monitor a voltage across the plurality of thermistors and the plurality of Zener diodes.

Example 2: The device of example 1, wherein the control unit comprises a constant current source.

Example 3: The device of any of examples 1-2, wherein:
- the first Zener diode is configured with a first nominal breakdown voltage that is based at least in part on the first variable resistance; and
- the second Zener diode is configured with a second nominal breakdown voltage that is based at least in part on the second variable resistance.

Example 4: The device of example 3, wherein:
- the first nominal breakdown voltage is based at least in part on a resistance of the first thermistor at a first temperature equal to or greater than a threshold temperature value; and
- the second nominal breakdown voltage is based at least in part on a resistance of the second thermistor at a second temperature equal to or greater than the threshold temperature value.

Example 5: The device of any of examples 1-4, wherein the control unit comprises logic configured to identify an over-temperature condition based on the voltage across the plurality of Zener diodes less than a threshold voltage value.

Example 6: The device of example 5, wherein the threshold voltage value comprises a sum of respective nominal breakdown voltages for each Zener diode of the plurality of Zener diodes.

Example 7: The device of any of examples 1-2, wherein:
- the plurality of thermistors connected in series with one another comprises a third thermistor and a fourth thermistor; and
- the plurality of Zener diodes comprises a third Zener diode connected in parallel with the third thermistor and a fourth Zener diode connected in parallel with the fourth thermistor.

Example 8: The device of example 7, wherein the threshold voltage value comprises a sum of the first nominal breakdown voltage, the second nominal breakdown voltage, a third nominal breakdown voltage, and a fourth nominal breakdown voltage.

Example 9: The device of any of examples 1-8, further comprising a receptacle configured to receive a two-pin connector of an electric vehicle charging controller, EVCC, wherein the receptacle comprises the terminals and the EVCC comprises the control unit.

Example 10: The device of any of examples 1-9, further comprising a wiring harness comprising a pair of wires that couple the one or more terminals to plurality of thermistors and the plurality of Zener diodes.

Example 11: The device of any of examples 1-10, wherein the thermistors of the plurality each comprise a negative temperature coefficient (NTC) sensor.

Example 12: The device of any of examples 1-11, wherein each thermistor of the plurality is associated with one phase conductor or one neutral conductor of an electric vehicle inlet (EVI).

Example 13: An electric vehicle inlet (EVI) comprising the device of any of examples 1-12.

Example 14: A circuit for sensing an over-temperature condition, the circuit comprising:
- a first thermistor configured with a first variable resistance inversely proportional to a first temperature of the first thermistor;
- a second thermistor configured with a second variable resistance inversely proportional to a second temperature of the second thermistor, wherein the second thermistor is connected in series with at least the first thermistor;
- a first Zener diode connected in parallel with the first thermistor;
- a second Zener diode connected in parallel with the second thermistor; and
- one or more terminals configured to connect a control unit in parallel with at least the series-connected first thermistor and second thermistor, the control unit configured to monitor a voltage across a plurality of Zener diodes comprising the first Zener diode and the second Zener diode.

Example 15: The circuit of example 14, wherein the control unit comprises a constant current source.

Example 16: The circuit of any of examples 14-15, further comprising:
- a third thermistor and a fourth thermistor connected in series with one another and the series-connected first thermistor and second thermistor;
- a third Zener diode connected in parallel with the third thermistor; and
- a fourth Zener diode connected in parallel with the fourth thermistor;
- wherein the control unit is configured to monitor the voltage across the plurality of Zener diodes, and the plurality of Zener diodes comprises the third Zener diode and the fourth Zener diode.

Example 17: The circuit of any of examples 14-16, wherein the control unit is configured to identify an over-temperature condition based on the voltage across the plurality of Zener diodes less than a threshold voltage value.

Example 18: The circuit of example 17, wherein the threshold voltage value comprises a sum of respective nominal breakdown voltages for each Zener diode of the plurality of Zener diodes.

Example 19: The circuit of any of examples 14-18, wherein the one or more terminals are configured to receive a two-pin connector of an electric vehicle charging controller (EVCC).

Example 20: The circuit of any of examples 14-19, further comprising a pair of conductors coupling the one or more terminals to the series-connected first thermistor, second thermistor, third thermistor, and/or fourth thermistor.

Example 21 A method for sensing an over-temperature condition, the method comprising:
- measuring a voltage across a plurality of thermistors connect in series with one another, wherein each thermistor is configured with a variable resistance that is inversely proportional to a temperature of the thermistor, and wherein each thermistor is connected in parallel with a Zener diode;
- determining that the voltage across the plurality of thermistors is less than a sum of nominal breakdown voltages of each of the Zener diodes; and
- performing an operation indicative of the over-temperature condition based on the determination that the voltage across the plurality of thermistors is less than the sum.

Example 22: The method of example 21, wherein performing the operation indicative of the over-temperature condition comprises at least one of:
- transmitting indication signaling associated with the over-temperature condition;
- changing a current or voltage associated with an electric vehicle inlet (EVI);
- disconnecting the EVI from a power source;
- activating a cooling source for the EVI; or
- logging data indicative of the over-temperature condition; or
- any combination thereof.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A device (10) for sensing an over-temperature condition, the device comprising:
- a plurality of thermistors (20a, 20b) connected in series with one another, the plurality comprising a first thermistor (20a) configured with a first variable resistance inversely proportional to a first temperature and a second thermistor (20b) configured with a second variable resistance inversely proportional to a second temperature;
- a plurality of Zener diodes (30a, 30b) comprising a first Zener diode (30a) connected in parallel with the first thermistor and a second Zener diode (30b) connected in parallel with the second thermistor; and
- one or more terminals (40a, 40b) configured to connect a control unit (50) in parallel with the plurality of thermistors and the plurality of Zener diodes, the control unit configured to monitor a voltage across the plurality of thermistors and the plurality of Zener diodes.

2. The device of claim 1, wherein the control unit comprises a constant current source (70).

3. The device of any of claims 1-2, wherein:
- the first Zener diode is configured with a first nominal breakdown voltage that is based at least in part on the first variable resistance; and
- the second Zener diode is configured with a second nominal breakdown voltage that is based at least in part on the second variable resistance.

4. The device of claim 3, wherein:
- the first nominal breakdown voltage is based at least in part on a resistance of the first thermistor at a first temperature equal to or greater than a threshold temperature value; and
- the second nominal breakdown voltage is based at least in part on a resistance of the second thermistor at a second temperature equal to or greater than the threshold temperature value.

5. The device of any of claims 1-4, wherein the control unit comprises logic (74) configured to identify an over-temperature condition based on the voltage across the plurality of Zener diodes less than a threshold voltage value.

6. The device of claim 5, wherein the threshold voltage value comprises a sum of respective nominal breakdown voltages for each Zener diode of the plurality of Zener diodes.

7. The device of any of claims 1-2, wherein:
- the plurality of thermistors (20a, 20b, 20c, 20d) connected in series with one another comprises a third thermistor (20c) and a fourth thermistor (20d); and
- the plurality of Zener diodes (30a, 30b, 30c, 30d) comprises a third Zener diode (30c) connected in parallel with the third thermistor and a fourth Zener diode (30d) connected in parallel with the fourth thermistor.

8. The device of claim 7, wherein the threshold voltage value comprises a sum of the first nominal breakdown voltage, the second nominal breakdown voltage, a third nominal breakdown voltage, and a fourth nominal breakdown voltage.

9. The device of any of claims 1-8, further comprising:
- a receptacle (80) configured to receive a two-pin connector of an electric vehicle charging controller, EVCC, (500) wherein the receptacle comprises the terminals and the EVCC comprises the control unit.

10. The device of any of claims 1-9, further comprising:
- a wiring harness (90) comprising a pair of wires that couple the one or more terminals to plurality of thermistors and the plurality of Zener diodes.

11. The device of any of claims 1-11, wherein each thermistor of the plurality is associated with one phase conductor or one neutral conductor of an electric vehicle inlet, EVI.

12. A circuit (12) for sensing an over-temperature condition, the circuit comprising:
- a first thermistor (20a) configured with a first variable resistance inversely proportional to a first temperature of the first thermistor;
- a second thermistor (20b) configured with a second variable resistance inversely proportional to a second temperature of the second thermistor, wherein the second thermistor is connected in series with at least the first thermistor;
- a first Zener diode (30a) connected in parallel with the first thermistor;
- a second Zener diode (30b) connected in parallel with the second thermistor; and
- one or more terminals (40a, 40b) configured to connect a control unit (50) in parallel with at least the series-connected first thermistor and second thermistor, the control unit configured to monitor a voltage across a plurality of Zener diodes comprising the first Zener diode and the second Zener diode.

13. The circuit of claim 12, further comprising:
- a third thermistor (20c) and a fourth thermistor (20d) connected in series with one another and the series-connected first thermistor and second thermistor;
- a third Zener diode (30c) connected in parallel with the third thermistor; and
- a fourth Zener diode (30d) connected in parallel with the fourth thermistor; wherein the control unit is configured to monitor the voltage across the plurality of Zener diodes, and the plurality of Zener diodes comprises the third Zener diode and the fourth Zener diode.

14. The circuit of claim 13, wherein the threshold voltage value comprises a sum of respective nominal breakdown voltages for each Zener diode of the plurality of Zener diodes.

15. The circuit of any of claims 12-14, further comprising:
- a pair of conductors (92a, 92b) coupling the one or more terminals to the series-connected first thermistor, second thermistor, third thermistor, and/or fourth thermistor.
